# EUROPEAN PATENT APPLICATION

(11) **EP 3 048 593 A1**
(43) Date of publication of application: **27.07.2016**
(21) Application number: 15185907.1
(22) Date of filing: 18.09.2015
(51) Int. Cl.: G07G 1/00, G07G 1/14

(54) **ARTICLE RECOGNITION DEVICE, SALES DATA PROCESSING DEVICE, AND CONTROL PROGRAM**

(30) Priority: 26.01.2015 JP 2015012439
(71) Applicant: Toshiba TEC Kabushiki Kaisha, Tokyo 141-0032 (JP)
(72) Inventor: KAKINO, Tomonari, Shinagawa-ku, Tokyo 141-0032 (JP)
(74) Representative: Takeuchi, Maya

(57) **Abstract**

An article recognition device of an embodiment includes each of a selection unit, an election unit, and an input unit. The selection unit selects a display color close to a color of the appearance of an article from among a plurality of display colors based on feature amount data shown in dictionary data by digitizing the features of the appearance including the colors of the articles. The election unit elects candidates from among the plurality of articles by matching the feature amount data acquired by digitizing the features of the appearance of the articles with the feature amount data in the dictionary data. The input unit inputs an operation of the operator for selecting one candidate from among candidate articles according to the operation on the operation screen.

## Description

### FIELD

Embodiments described herein relate generally to an article recognition device, a sales data processing device, and a control program.

### BACKGROUND

An article recognition device that recognizes an article from an image obtained by imaging the article to be recognized using a video camera or the like is realized in the form to be incorporated in a point-of-sale (POS) device or the like.

However, since articles whose appearances are similar are present in plural in many cases, final determination is considered to be performed by an operator's operation.

In this case, it is typical to display buttons in association with each of candidates of an article to be recognized on a touch panel and determine an article associated with a touched button as the article to be recognized. In addition, the operator can recognize whether respective buttons are associated with the articles by displaying the buttons with characters of the names of the articles serving as candidates.

However, in a case where the operator can recognize the articles associated with the respective buttons only using characters, the operator needs to read characters displayed on the respective buttons one by one, it takes time to determine which button needs to be touched.

In consideration of the problem described above, it has been desired to enable the operator to easily find out a button associated with an article to be determined as an article to be recognized from among a plurality of buttons.

An example of the related art is JP-A-2014-139847.

### DESCRIPTION OF THE DRAWINGS

FIG. 1 is an external view illustrating a store accounting system which includes a commodity reader according to an exemplary embodiment.
FIG. 2 is a block diagram illustrating electrical elements in the store accounting system of FIG. 1.
FIG. 3 is a diagram schematically illustrating a data recorder included in a display color database.
FIG. 4 is a flowchart illustrating an update process performed by a CPU provided in the commodity reader.
FIG. 5 is a view schematically illustrating a quantization table.
FIG. 6 is a flowchart of a control process performed by the CPU provided in the commodity reader.
FIG. 7 is a flowchart of a control process performed by the CPU provided in the commodity reader.
FIG. 8 is a flowchart of a control process performed by the CPU provided in the commodity reader.
FIG. 9 is a view illustrating an example of an operation screen.
FIG. 10 is a view illustrating an example of an operation screen after the operation screen of FIG. 9 is updated.
FIG. 11 is a view illustrating an example of an operation screen after the operation screen of FIG. 10 is updated.

### DETAILED DESCRIPTION

An object of an exemplary embodiment is to provide an article recognition device, a sales data processing device, and a control program that enable an operator to easily find a button associated with an article to be determined as an article to be recognized from among a plurality of buttons.

According to an embodiment, there is provided an article recognition device that recognizes an article by referring to dictionary data which is stored in a storage device in association with each of a plurality of articles and describes feature amount data digitizing features of the appearance including colors of the articles including a selection unit, an acquisition unit, an election unit, a control unit, and an input unit. The selection unit selects a display color close to a color of the appearance of an article from among a plurality of display colors based on the feature amount data stored in the storage device. The acquisition unit acquires feature amount data by digitizing the features of the appearance of an article reflected on an image captured by an imaging device. The election unit elects at least one candidate of the article reflected on the image from among the plurality of articles by matching the feature amount data acquired by the acquisition unit with the feature amount data described in the dictionary data. The control unit controls a display device such that a display screen of the display device is used as an operation screen including at least one button which is used for an operator to select one candidate from among candidates elected by the election unit and whose at least a part is displayed with a display color selected by the selection unit related to the article serving as the candidate. The input unit inputs an operation of the operator for selecting one candidate from among candidates elected by the election unit according to the operation on the operation screen displayed by the display device.

Preferably, the device further comprises: a storage unit configured to store color data displaying display colors selected by the selection unit related to the article in association with each of the plurality of articles. The control unit may display the button for selecting the candidate article by the operator on the operation screen with the display color displayed by the color data stored in the storage unit in association with the article serving as a candidate.

Preferably, the control unit displays the button such that characters for identifying the candidate article are displayed as the foreground and the background is displayed by the display color selected by the selection unit.

Preferably, the control unit displays the button such that an image showing the appearance of the candidate article is displayed as the foreground and the background is displayed by the display color selected by the selection unit.

The present invention also relates to a sales data processing device that recognizes an article by referring to dictionary data which is stored in a storage device in association with each of a plurality of articles and describes feature amount data digitizing features of the appearance including colors of the articles and performs data processing related to sales of the recognized article, the device comprising: a selection unit which selects a display color close to the color of the appearance of the article from among a plurality of display colors based on the feature amount data stored in the storage device; an acquisition unit which acquires the feature amount data by digitizing the features of the appearance of the article reflected on an image captured by an imaging device; an election unit which elects at least one candidate of the article reflected on the image from among the plurality of articles by matching the feature amount data acquired by the acquisition unit with the feature amount data described in the dictionary data; a control unit which controls a display device such that a display screen of the display device is used as an operation screen including at least one button which is used for an operator to select one candidate from among candidates elected by the election unit and whose at least a part is displayed with a display color selected by the selection unit related to the article serving as the candidate; an input unit which inputs an operation of the operator for selecting one candidate from among candidates elected by the election unit according to the operation on the operation screen displayed by the display device; and a processing unit which performs the data processing based on the operation input by the input unit.

The present invention further relates to a method of controlling an article recognition device that recognizes an article by referring to dictionary data which is stored in a storage device in association with each of a plurality of articles and describes feature amount data digitizing features of the appearance including colors of the articles. The method comprising: selecting a display color close to the color of the appearance of the article from among a plurality of display colors based on the feature amount data stored in the storage device; acquiring the feature amount data by digitizing the features of the appearance of the article reflected on an image captured by an imaging device; electing at least one candidate of the article reflected on the image from among the plurality of articles by matching the feature amount data acquired in the acquiring with the feature amount data described in the dictionary data; controlling a display device such that a display screen of the display device is used as an operation screen including at least one button which is used for an operator to select one candidate from among candidates elected in the electing and whose at least a part is displayed with a display color selected in the selecting related to the article serving as a candidate; and inputting an operation of the operator for selecting one candidate from among candidates elected in the electing according to the operation on the operation screen displayed by the display device.

Preferably, the method comprising: storing color data displaying display colors selected at the selecting step related to the article in association with each of the plurality of articles; and displaying the button for selecting the candidate article by the operator on the operation screen with the display color displayed by the color data stored at the storing step in association with the article serving as a candidate.

Preferably, the method comprising: displaying the button such that characters for identifying the candidate article are displayed as the foreground and the background is displayed by the display color selected at the selecting step.

Preferably, the method comprising: displaying the button such that an image showing the appearance of the candidate article is displayed as the foreground and the background is displayed by the display color selected at the selecting unit.

Hereinafter, exemplary embodiments of an article recognition device will be described, as non-limiting examples, with reference to the accompanying drawings. The present exemplary embodiment describes a case where the article recognition device is applied to a commodity reader using a commodity being sold in a store such as a supermarket or the like as an article to be recognized. In addition, specifically, the present exemplary embodiment describes a case where the article recognition device is applied to a vertical type commodity reader disposed on an accounting counter which is provided in the store.

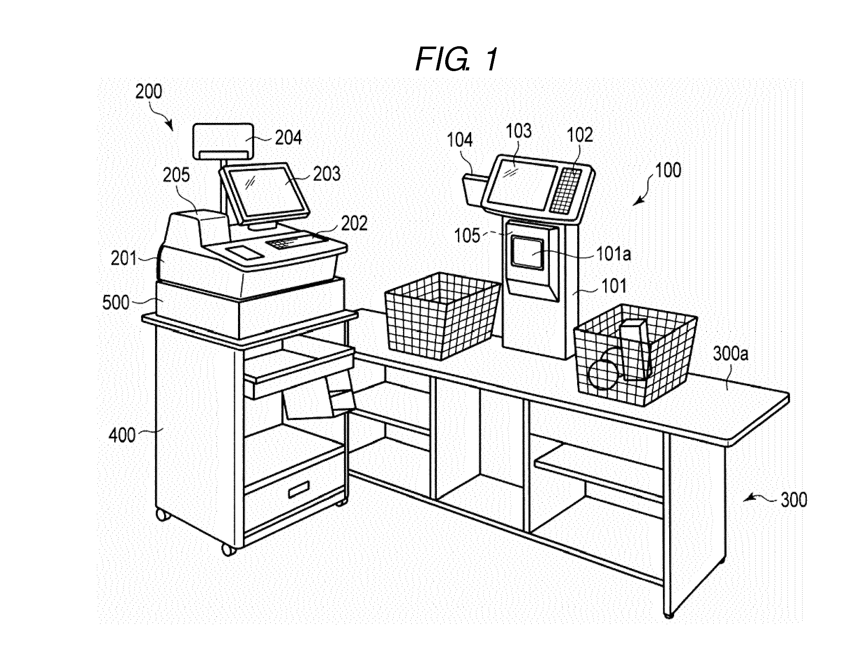

FIG. 1 is an external view illustrating a store accounting system including a commodity reader according to the present exemplary embodiment. The store accounting system is an example of a sales data processing device.

The store accounting system illustrated in FIG. 1 includes a commodity reader 100 and a POS terminal 200. The commodity reader 100 is mounted on an accounting counter 300. The POS terminal 200 is installed on a drawer 500 placed on a register table 400. The commodity reader 100 and the POS terminal 200 are electrically connected to each other through a communication cable (not illustrated). An automatic change machine may be provided in place of the drawer 500.

The commodity reader 100 includes a housing 101, a keyboard 102, a touch panel 103, a display 104 for a customer, and an imaging unit 105.

The housing 101 has a flat box shape and is disposed on the accounting counter 300. The housing 101 supports the keyboard 102, the touch panel 103, and the display 104 for a customer on the upper end and supports the imaging unit 105 in the inside thereof. The housing 101 includes a reading window 101a facing the imaging unit 105 and enables the imaging unit 105 to image an object positioned in front of the reading window 101a through the reading window 101a.

The POS terminal 200 includes a housing 201, a keyboard 202, a display 203 for an operator, a display 204 for a customer, and a printer 205.

The housing 201 supports the keyboard 202 in a state in which a part of the keyboard is exposed to the outside, supports the display 203 for an operator and the display 204 for a customer in a state in which the displays 203 and 204 are positioned outside, and supports the printer 205 in the inside thereof.

The accounting counter 300 includes an elongated top plate 300a. The accounting counter 300 divides a customer passage (the rear side in FIG. 1) along the longitudinal direction of the top plate and an operator space (the front side in FIG. 1). The housing 101 is positioned in approximately the center of the longitudinal direction of the top plate 300a, directs each of the keyboard 102, the touch panel 103, and the reading window 101a to the operator space side, and directs the display 104 for a customer to the customer passage side. On the upper surface of the top plate 300a, a region interposing the commodity reader 100 on the upstream side of a customer moving direction is used as a space for placing a commodity, in which sales registration is not completed yet, from among commodities that shoppers intend to buy. Further, a region on the downstream side is used as a space for placing a commodity in which sales registration is completed. Sales commodities are generally moved from the region on the upstream side of the customer moving direction to the region on the downstream side after passing through the front of the reading window 101a.

The register table 400 is positioned on the operator space side so as to be arranged in the end portion of the accounting counter 300 on the downstream side with respect to the customer moving direction in the customer passage.

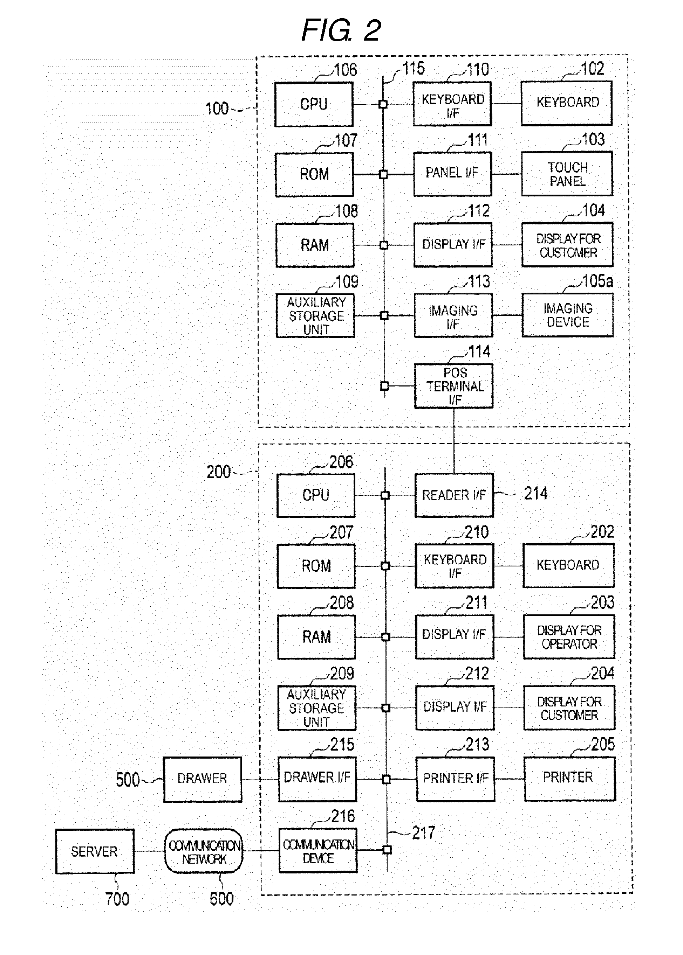

FIG. 2 is a block diagram illustrating electrical elements in the store accounting system of FIG. 1. Further, the same elements among the elements illustrated in FIG. 2 as those illustrated in FIG. 1 are denoted by the same reference numerals.

As electrical elements, the commodity reader 100 includes an imaging device 105a, a central processing unit (CPU) 106, a read-only memory (ROM) 107, a random-access memory (RAM) 108, an auxiliary storage unit 109, a keyboard interface (keyboard I/F) 110, a panel interface (panel I/F) 111, a display interface (display I/F) 112, an imaging interface (imaging I/F) 113, a POS terminal interface (POS terminal I/F) 114, and a bus line 115 in addition to the keyboard 102, the touch panel 103, and the display 104 for a customer. The bus line 115 includes an address bus and a data bus and electrically connects the CPU 106, the ROM 107, the RAM 108, the keyboard interface 110, the panel interface 111, the display interface 112, the imaging interface 113, and the POS terminal interface 114 to each other.

The keyboard 102 includes a plurality of key switches and outputs a command expressing the contents of the operation of the operator with respect to the key switches.

The touch panel 103 includes a display device such as a liquid crystal display (LCD) and a transparent two-dimensional touch sensor arranged by overlapping with a display screen of the display device. The touch panel 103 displays an arbitrary image on the display device under the control of the CPU 106. The touch panel 103 detects a touch position of the operator on the display screen of the display device using a two-dimensional touch sensor and outputs coordinate data showing the tough position. The touch panel 103 is used for displaying an image expressing various kinds of pieces of information to be presented with respect to the operator and used for inputting the operation of the operator.

The display 104 for a customer displays an arbitrary character string or an arbitrary image under the control of the CPU 106. The display 104 for a customer is used for displaying various character strings or images to be presented with respect to a customer. As the display 104 for a customer, for example, a fluorescent tube display device or an LCD can be used.

The imaging device 105a is included in the imaging unit 105 together with an imaging lens (not illustrated). The imaging device 105a includes a charge coupled device (CCD) imaging element, which is an area image sensor, and a driving circuit thereof. The imaging lens images an image in an imaging region on the CCD imaging element. The term "imaging region" indicates a region in which an image is imaged in the area of the CCD imaging element through the imaging lens from the reading window 101a. The imaging device 105a acquires frame data showing an image (frame image) in the imaging region at constant time intervals and outputs the frame data.

The CPU 106 controls respective elements of the commodity reader 100 in order to realize various operations as the commodity reader 100 based on an operating system, a middleware, and an application program stored in the ROM 107 and the RAM 108.

The ROM 107 stores the above-described operating system. The ROM 107 stores the above-described middleware or application program in some cases. In addition, the ROM 107 occasionally stores data to be referenced by the CPU 106 when the CPU 106 performs various processes.

The RAM 108 stores data to be referenced by the CPU 106 when the CPU 106 performs various processes. In addition, the RAM 108 is used as a so-called work area which stores data to be temporarily used by the CPU 106 when the CPU 106 performs various processes.

The auxiliary storage unit 109 stores data to be used by the CPU 106 when the CPU 106 performs various processes and data generated by processes of the CPU 106. The auxiliary storage unit 109 stores the above-described middleware or application program in some cases. As the auxiliary storage unit, electric erasable programmable read-only memory (EEPROM), a hard disk drive, or a solid state drive (SSD) can be used. A part of a storage region of the auxiliary storage unit 109 stores a display color database. That is, the auxiliary storage unit 109 is an example of the storage unit.

Moreover, a computer is configured of the CPU 106, the RAM 107, the ROM 108, and the auxiliary storage unit 109. The CPU 106 corresponds to the central part of the computer. The RAM 107 and the ROM 108 correspond to main storage portions of the computer. The auxiliary storage unit 109 corresponds to an auxiliary storage portion of the computer.

The display color database is used for defining display colors of buttons for receiving the operation of the operator for each commodity in order to determine a commodity considered as a candidate of a sales commodity during a recognition process described below as the sales commodity.

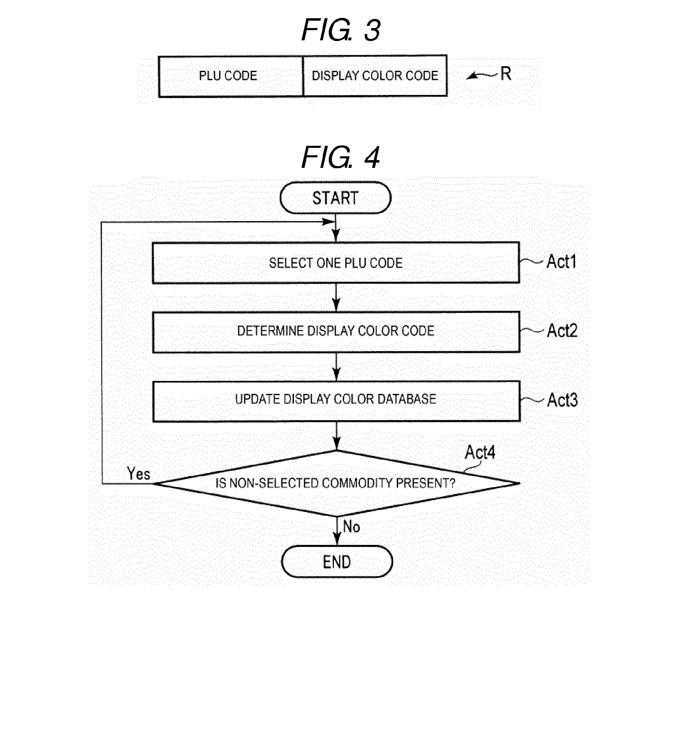

FIG. 3 is a diagram schematically illustrating a data record R included in the display color database.

The display color database is a collection of a plurality of data records R.

The data record R describes a commodity ID (PLU code) by associating with a display color code.

An application program stored in the ROM 107 or the auxiliary storage unit 109 includes a control program which describes a control process described below. Further, the commodity reader 100 is transferred in a state in which the control program is stored in the ROM 107 or the auxiliary storage unit 109. However, the commodity reader 100 may be transferred in a state in which the control program is not stored in the ROM 107 or the auxiliary storage unit 109. Further, the control program is transferred by being recorded in a removable recording medium or through a network and then may be written in the auxiliary storage unit 109 of the above-described commodity reader 100 which is separately transferred. As the recording medium, a magnetic disk, a magneto-optical disk, an optical disk, or a semiconductor memory can be used.

The keyboard interface 110 interfaces reception and transmission of data between the keyboard 102 and the CPU 106. As the keyboard interface 110, for example, a known device in conformity with the PS/2 standard or the universe serial bus (USB) standard can be used.

The panel interface 111 interfaces reception and transmission of data and video signals between the touch panel 103 and the CPU 106. The panel interface 111 includes an interface for a display device and an interface for a touch sensor. As the interface for a display device, for example, a known device in conformity with the video graphics array (VGA) standard (analog RGB standard), the digital video interface (DVI) standard, or the low voltage differential signaling (LVDS) standard can be used. As the interface for a touch sensor, a known device in conformity with the USB standard or the recommended standard (RS)-232C standard can be used.

The display interface 112 interfaces reception and transmission of video signals between the display 104 for a customer and the CPU 106. As the display interface 112, if the display 104 for a customer is a fluorescent tube display device, a known device in conformity with the USB standard or the RS-232C standard can be used. Further, as the display interface 112, if the display 104 for a customer is an LCD, a known device in conformity with the VGA standard, the DVI standard, or the LVDS standard can be used.

The imaging interface 113 interfaces reception and transmission of data between the imaging device 105a and the CPU 106. As the imaging interface 113, a known device in conformity with the USB standard or the institute of electrical and electronic engineers (IEEE) 1394 standard can be used.

The POS terminal interface 114 interfaces reception and transmission of data between the POS terminal 200 and the CPU 106. As the POS terminal interface 114, a known device in conformity with the USB standard or the RS-232C standard can be used.

As electrical elements, the POS terminal 200 includes a CPU 206, a ROM 207, a RAM 208, an auxiliary storage unit 209, a keyboard interface 210, display interfaces (display I/F) 211 and 212, a printer interface (printer I/F) 213, a reader interface (reader I/F) 214, a drawer interface (drawer I/F) 215, a communication device 216, and a bus line 217 in addition to the keyboard 202, the display 203 for an operator, the display 204 for a customer, and the printer 205. Further, the bus line 217 includes an address bus and a data bus and electrically connects the CPU 206, the ROM 207, the RAM 208, the auxiliary storage unit 209, the keyboard interface 210, the display interface 211, the display interface 212, the printer interface 213, the reader interface 214, the drawer interface 215, and the communication device 216 to each other.

The keyboard 202 includes a plurality of key switches and outputs a command expressing the contents of the operation of the operator with respect to the key switches.

The display 203 for an operator displays an arbitrary image under the control of the CPU 206. The display 203 for an operator is used for displaying various images to be presented with respect to the operator. As the display 203 for an operator, for example, an LCD can be used.

The display 204 for a customer displays an arbitrary character string or an image under the control of the CPU 206. The display 204 for a customer is used for displaying various character strings or images to be presented with respect to a customer. As the display 204 for a customer, for example, a fluorescent tube display device or an LCD can be used.

The printer 205 prints a receipt image showing the contents of transaction on receipt paper under the control of the CPU 206. As the printer 205, existing printers having various known systems can be used. Typically, the printer 205 is a thermal printer.

The CPU 206 controls respective units in order to realize various operations as the POS terminal 200 based on an operating system, a middleware, and an application program stored in the ROM 207 and the RAM 208.

The ROM 207 stores the above-described operating system. The ROM 207 stores the above-described middleware or application program in some cases. In addition, the ROM 207 occasionally stores data to be referenced by the CPU 206 when the CPU 206 performs various processes.

The RAM 208 stores data to be referenced by the CPU 206 when the CPU 206 performs various processes. In addition, the RAM 208 is used as a so-called work area which stores data to be temporarily used by the CPU 206 when the CPU 206 performs various processes. A part of the storage area of the RAM 208 is used as the commodity list area for managing information related to commodities which are sales-registered.

The auxiliary storage unit 209 is, for example, a hard disk drive or an SSD and stores data to be used by the CPU 206 when the CPU 206 performs various processes and data generated by the processes of the CPU 206.

The keyboard interface 210 interfaces reception and transmission of data between the keyboard 202 and the CPU 206. As the keyboard interface 210, for example, a known device in conformity with the PS/2 standard or the USB standard can be used.

The display interface 211 interfaces reception and transmission of video signals between the display 203 for an operator and the CPU 106. As the display interface 211, a known device in conformity with the VGA standard, the DVI standard, or the LVDS standard can be used.

The display interface 212 interfaces reception and transmission of video signals between the display 204 for a customer and the CPU 206. As the display interface 212, if the display 204 for a customer is a fluorescent tube display device, a known device in conformity with the USB standard or the RS-232C standard can be used. Further, as the display interface 212, if the display 204 for a customer is an LCD, a known device in conformity with the VGA standard, the DVI standard, or the LVDS standard can be used.

The printer interface 213 interfaces reception and transmission of data between the printer 205 and the CPU 206. As the printer interface 213, for example, a known device in conformity with the USB standard, the RS-232C standard, or the IEEE 1284 standard (so-called centronics specification) can be used.

The reader interface 214 interfaces reception and transmission of data between the commodity reader 100 and the CPU 206. As the reader interface 214, a known device in conformity with the standard followed by the POS terminal interface 114 can be used.

The drawer interface 215 outputs a driving signal for releasing the drawer 500 according to an instruction of releasing the drawer from the CPU 206 to the drawer 500.

The communication device 216 communicates a server 700 through a communication network 600. As the communication device 216, for example, an existing LAN communication device can be applied.

A recognition dictionary file is prepared in the form which can be referenced by the CPU 106 before the store accounting system is operated. The recognition dictionary file may be stored in any of the ROM 107, the auxiliary storage unit 109, the ROM 207, and the auxiliary storage unit 209. Alternatively, the recognition dictionary file may be stored in the outside of the store accounting system such as the server 700 or the like.

The recognition dictionary file is a computer file showing dictionary data that describes a plurality of pieces of feature amount data in association with PLU codes and names of commodities identifying the commodities for each commodity to be recognized. The feature amount of the appearance which is surface information (the appearance shape, the color, the pattern, the condition of concave-convex, and the like) of a commodity is extracted from reference images obtained by imaging the commodity and data in which the feature amount of the appearance is represented by parameters is defined as feature amount data. In addition, the feature amount data obtained from the reference images obtained by imaging the commodity in various directions is associated with the PLU code of the corresponding commodity. The number of pieces of the feature amount data with respect to one commodity is not fixed. Further, the number of pieces of the feature amount data may vary depending on commodities. In addition, the names of commodities may not be necessarily included in the recognition dictionary file.

The operation of the commodity reader 100 in the store accounting system configured in the above-described manner will be described below. Moreover, the contents of various processes described below are merely examples and various processes which can obtain the same results can be appropriately used.

The CPU 106 performs an update process of the display color database based on the control program stored in the ROM 107 or the auxiliary storage unit 109 at the appropriate timing. The update process is performed as a part of a preparatory work for newly starting to use the commodity reader 100 or the like. It is preferable that the update process is performed when the recognition dictionary file is updated. Further, it is considered that the recognition dictionary file is automatically learned according to the results of a recognition process described below, but it is preferable that the update process is performed whenever the recognition dictionary file is updated or periodically in this case.

Fig. 4 is a flowchart of the update process performed by the CPU 106.

The CPU 106 selects a PLU code which is not selected during the current update process from among PLU codes included in the recognition dictionary file in Act 1.

The CPU 106 determines the color of the appearance of a commodity to be recognized by the PLU code from the feature amount described in the recognition dictionary file in association with the selected PLU code described above and determines a display color code corresponding to the color in Act 2.

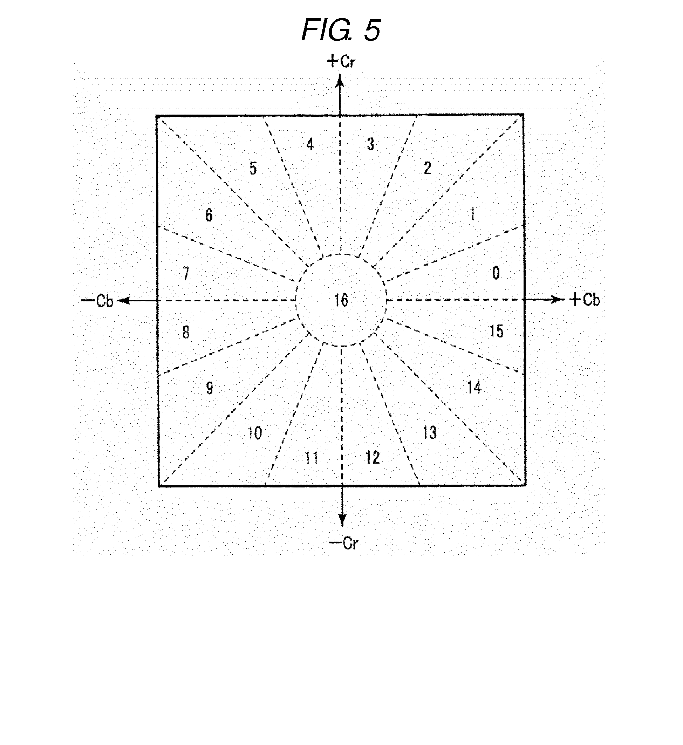

FIG. 5 is a view schematically illustrating a quantization table.

The quantization table illustrated in FIG. 5 is obtained by dividing a color space in which a Cr component and a Cb component in a YCrCb system are respectively allocated by a vertical axis and a horizontal axis into seventeen regions indicated by dashed lines and assigning display color codes of "0" to "17" thereto.

The CPU 106 determines a display color code assigned to a region in which a color represented by the feature amount includes the coordinate on the color space.

In addition, assignment of the display color codes with respect to respective regions, the form or the number of division of the color space, and the color space to be used are optional.

The CPU 106 updates the display color database stored in the auxiliary storage unit 109 in Act 3. Specifically, the CPU 106 determines whether a data recorder including the PLU code selected in Act 1 is included in the display color database. In addition, the CPU 106 rewrites the display color code described in the data recorder to a display color code determined in the above-described manner when the display color database includes the corresponding data recorder. The CPU 106 adds a new data recorder which describes the PLU code selected in Act 1 and the display color code determined in the above-described manner to the display color database when the corresponding data recorder is not included in the display color database.

The CPU 106 determines whether there are PLU codes which are not selected yet during the current update process from among the PLU codes included in the recognition dictionary file in Act 4. In addition, the CPU 106 determines as Yes when non-selected PLU codes exist and returns to Act 1. In this manner, the CPU 106 performs Acts 1 to 3 with respect to all PLU codes included in the recognition dictionary file. Further, the CPU 106 determines as No in Act 4 and finishes the update process when processes of Acts 1 to 3 are finished with respect to all PLU codes included in the recognition dictionary file.

In addition, if the update process is performed according to the update of the recognition dictionary file, the CPU 106 may perform Acts 1 to 3 with respect to only PLU codes in which the feature amount is updated.

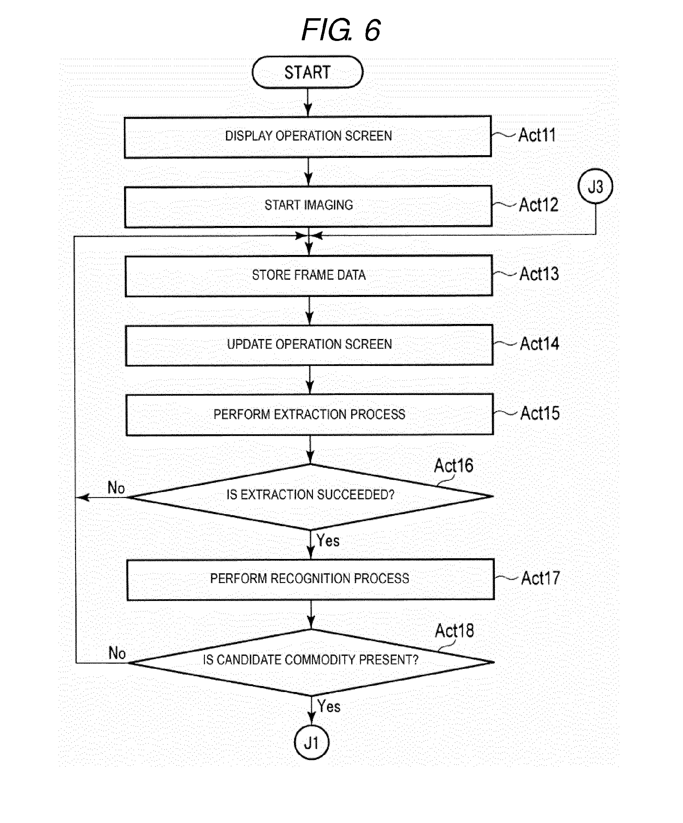

FIGS. 6 to 8 are flowcharts illustrating the control process performed by the CPU 106 in order to control the operation of the commodity reader 100.

For example, when the starting conditions of a registration process are satisfied by a predetermined operation performed by the operator using the keyboard 202 to instruct the start of registration of sales commodities, the CPU 206 sends a reading start command by the reader interface 214 to the commodity reader 100. The reading start command is notified to the CPU 106 by the POS terminal interface 114. Further, when the CPU 106 receives the reading start command, the control process illustrated in FIGS. 6 to 8 is started based on the control program. Alternatively, when the starting conditions of the registration process are satisfied by a predetermined operation performed by the operator using the keyboard 102 or the touch panel 103 to instruct the start of registration of sales commodities, the CPU 106 starts the control process illustrated in FIGS. 6 to 8.

The CPU 106 uses a screen of the touch panel 103 as an operation screen in Act 11 illustrated in FIG. 6. Specifically, the CPU 106 generates image data showing the operation screen, stores the image data in the RAM 108, and controls the touch panel 103 so as to perform a display based on the image data. The touch panel 103 under the control displays an image based on the image data from the RAM 108.

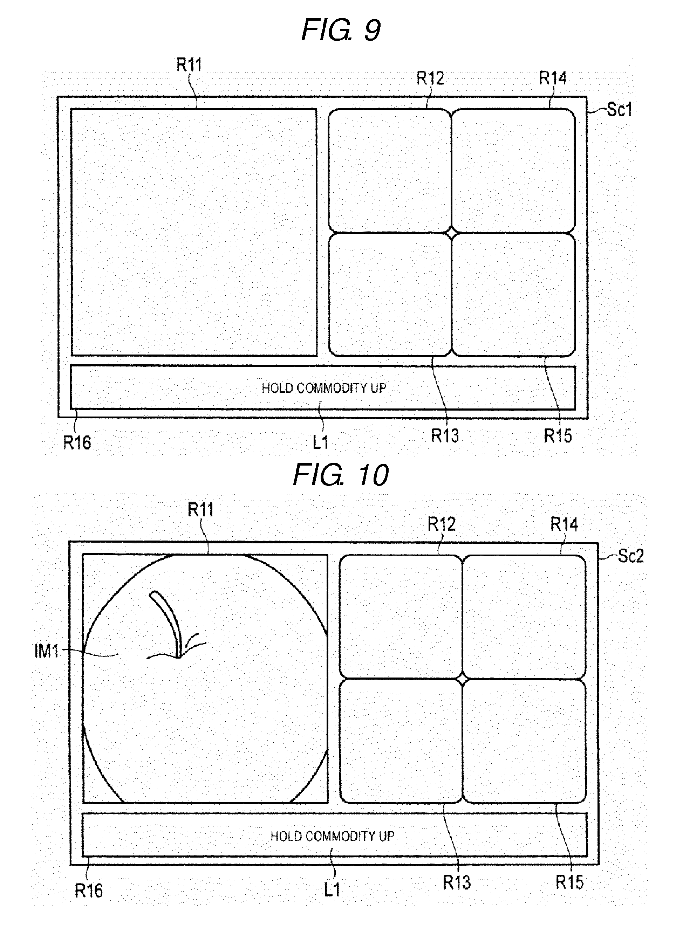

FIG. 9 is a view illustrating an example of an operation screen SC1.

The operation screen SC1 includes six regions R11, R12, R13, R14, R15, and R16.

The region R11 is a region for displaying an image captured by the imaging device 105a. The regions R12 to R15 are regions which become buttons for respectively displaying names of commodities of the first candidate to the fourth candidate selected by the recognition process described below and for selecting commodities determined as sales commodities from among the respective candidate commodities. The region R16 is a region for displaying a message that guides the operation of the commodity reader 100. In addition, the first candidate is a commodity which is determined that the possibility of a commodity reflected on an image captured by the imaging device 105a being the commodity of the first candidate is the highest. The second to fourth candidates are commodities which are determined that the possibility of commodities reflected on an image being the commodities of the second to fourth candidates are the second highest, the third highest, and the fourth highest.

The regions R11 to R15 in the operation screen SC1 are all blanks. The region R16 in the operation screen SC1 displays a text message L1 urging the operator to hold a sales commodity in front of the imaging unit 105.

The CPU 106 starts imaging sales commodities using the imaging device 105a in Act 12. Specifically, the CPU 106 outputs an imaging ON signal to the imaging device 105a from the imaging interface 113. The imaging device 105a after receiving the imaging ON signal starts imaging moving images. In addition, when a sales commodity gripped by hand of the operator in this state is held in front of the reading window 101a, the sales commodity is reflected on a moving image captured by the imaging device 105a. The imaging device 105a periodically outputs frame data.

The CPU 106 stores frame data output by the imaging device 105a in the RAM 108 in Act 13.

The CPU 106 updates the operation screen in Act 14. Specifically, the CPU 106 allows a mirror image of an image shown by the frame data stored in the RAM 108 to be displayed in the region R11.

FIG. 10 is a view illustrating an example of an operation screen SC2 after being updated from the operation screen SC1 in Act 14. Further, elements also included in the operation screen SC1 from among elements of the operation screen SC2 are denoted by the same reference numerals as those in FIG. 9.

In the operation screen SC2, an image IM1 of a sale commodity is displayed in the region R11.

The CPU 106 performs an extraction process in Act 15. The extraction process is a process of extracting an object corresponding to a commodity reflected on an image (hereinafter, referred to as a frame image) shown by frame data. Specifically, first, the CPU 106 attempts to detect a skin color region from the frame image. The CPU 106 binarizes a frame image and extracts a contour line or the like from the binarized image obtained in this manner when the skin color region is detected, that is, when a hand of the operator is reflected on the frame image. The CPU 106 specifies the contour of a sales commodity to be assumed to be held by a hand of the operator. The CPU 106 extracts a region in the inside of the contour as an object. In addition, a hand of the operator is not illustrated in FIG. 10.

The CPU 106 confirms whether the object is extracted in Act 16. In addition, the CPU 106 determines as No when the object is not extracted and returns to Act 13. That is, the CPU 106 repeatedly attempts extraction of the object with respect to a new frame image until the object is extracted. Further, the CPU 106 determines as Yes in Act 16 when the object is extracted and proceeds to Act 17.

The CPU 106 performs the recognition process in Act 17. The recognition process is a process of recognizing that to which commodity image the object extracted in Act 15 belongs. A known technique can be used for this recognition process. Hereinafter, one specific example of the recognition process will be described.

The CPU 106 analyzes the object extracted in Act 15 and reads the feature amount such as the shape, the color of the surface, the pattern, and the condition of concave-convex. In addition, the CPU 106 recognizes that to which commodity the object belongs by matching the read feature amount with the feature amount described in the recognition dictionary file.

The recognition of commodities here is referred to as generic object recognition.

In regard to the technique of the generic object recognition, various recognition techniques are analyzed in the following literature and the techniques can be used for object recognition described above.

"the Current State and Future Directions on Generic Object Recognition" written by Keiji Yanai, Journal of Information Processing, Vol. 48, No. SIG16, [search on August 10, 2010], Internet <URL: http://mm.cs.uec.ac.jp/IPSJ-TCVIM-Yanai.Pdf>

Further, a technique of performing generic object recognition by dividing the region of an image for each object is analyzed in the following literature and the technique can be used for the object recognition described above.

*"*Semantic Texton Forests for Image Categorization and Segmentation" written by Jamie shotton et al, [search on August 10 2010], Internet <URL: http://citeseerx.ist.psu.due/viewdoc/download?doi=10.1.1.145.3036&rep=repl&type=p df>

In general, there are many commodities whose appearances are similar to one another. For this reason, it is not preferable to determine a sales commodity by the above-described recognition process. Here, the CPU 106 selects up to four commodities at most, whose similarities acquired for each commodity are high, in Act 17 and sets the first to fourth candidates in order of higher similarity. In addition, the CPU 106 writes the PLU codes of the respective first to fourth candidates in the RAM 108. In this case, the CPU 106 determines that there is no candidate commodity when the highest similarity is less than a predetermined value.

In addition, when the CPU 106 performs the control process based on the control program, a computer in which the CPU 106 is positioned in the central portion functions as an acquisition unit and an election unit.

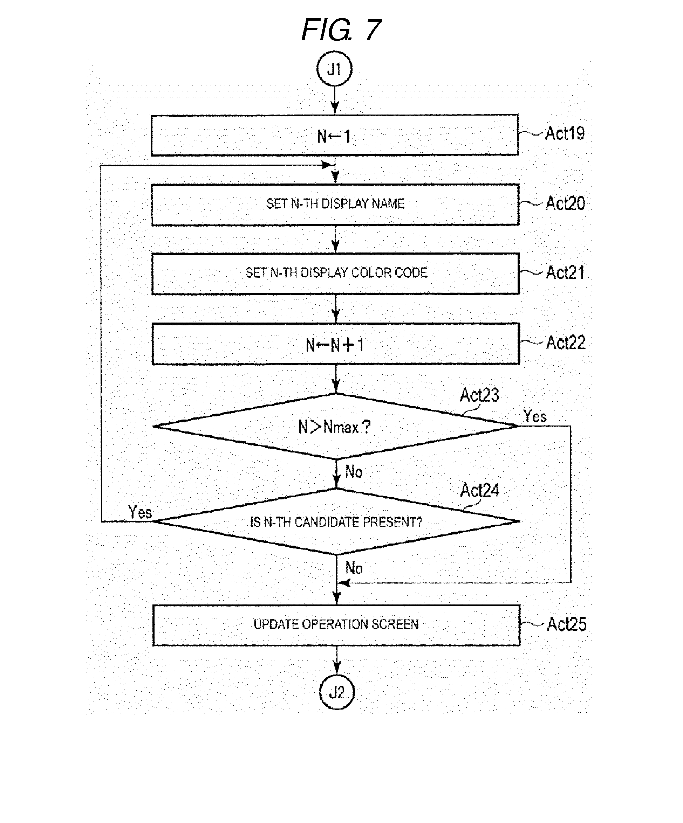

The CPU 106 confirms whether there are candidate commodities present using the above-described recognition process in Act 18. In addition, the CPU 106 determines as No when there is no candidate commodity and returns to Act 13. However, the CPU 106 determines as Yes when at least the first candidate is set and proceeds to Act 19 illustrated in FIG. 7.

The CPU 106 sets 1 as a variable N in Act 19.

The CPU 106 sets a commodity name of a commodity which is the N-th candidate as the N-th display name in Act 20. Specifically, the CPU 106 sets a commodity name described in the recognition dictionary file in association with a PLU code of the N-th candidate written in the RAM 108 in Act 17 as the N-th display name.

The CPU 106 sets a display color in association with a commodity which is the N-th candidate as the N-th display color in Act 21. Specifically, the CPU 106 sets the PLU code of the N-th candidate written in the RAM 108 in Act 17 and a display color code described in the data recorder of the display color database as a code of the N-th display color. When the CPU 106 performs the control process based on the control program, the computer in which the CPU 106 is positioned in the central portion functions as a selection unit.

The CPU 106 increases the value of the variable N by one in Act 22.

The CPU 106 confirms whether the variable N is greater than a maximum value Nmax of the variable N in Act 23. In the present exemplary embodiment in which up to the fourth candidate is set in the recognition process, the maximum value Nmax is "4." In addition, the CPU 106 determines as No when the variable N is the maximum value Nmax or less and proceeds to Act 24.

The CPU 106 confirms whether the N-th candidate is set in Act 24. In addition, the CPU 106 repeats the processes subsequent to Act 20 in the same manner described above when the N-th candidate is set.

Moreover, the CPU 106 determines as Yes in Act 23 and proceeds to Act 25 when the fourth display color code is already set in Act 21. Further, the CPU 106 determines as No in Act 24 and proceeds to Act 25 when display color codes are already set with respect to all candidates set in the recognition process.

The CPU 106 updates the operation screen in Act 25. Specifically, the CPU 106 sets the operation screen to reflect the setting made in Acts 20 and 21. Further, the CPU 106 replaces the display on the region R16 for a text message that urges the operator to select a commodity which is confirmed as a sales commodity from among the candidate commodities. When the CPU 106 performs the control process based on the control program, the computer in which the CPU 106 is positioned in the central portion functions as a control unit.

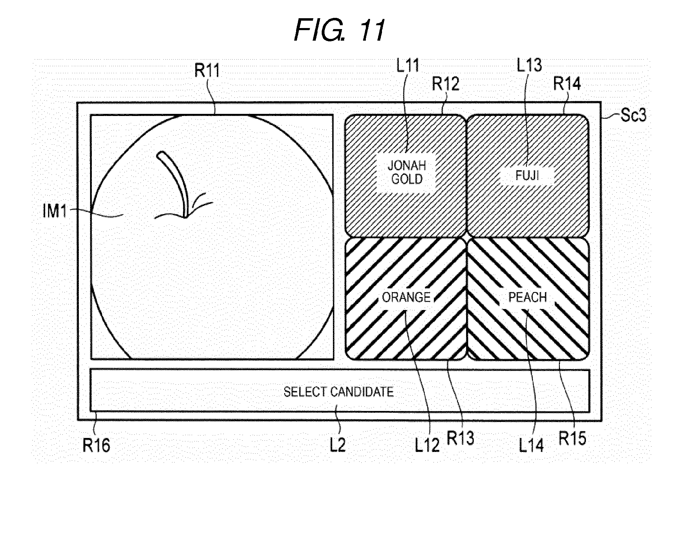

FIG. 11 is a view illustrating an example of an operation screen SC3 after the operation screen SC2 is updated in Act 25. In addition, elements also included in the operation screens SC1 and SC2 from among elements of the operation screen SC3 are denoted by the same reference numerals as those in FIGS. 9 and 10.

The operation screen SC3 illustrates a case in which "Jonah Gold," "Orange," "Fuji," and "Peach" are respectively set as the first to fourth candidates in Act 17.

In the regions R12 to R15, character strings L11, L12, L13, and L14 showing the first to fourth commodity names are displayed as the foregrounds. The backgrounds of the regions R12 to R15 are displayed with the first to fourth display colors. In FIG. 11, differences in the background colors of the regions R12 to R15 are shown by the difference of hatching. In the regions R12 and R14, the background color is the same and the display color code is, for example, "4." In the regions R13 and R15, both of the background colors are different from the colors of other regions and the display color codes are, for example, "6" and "1." In the region R16, a text message L2 that urges the operator to select a commodity which is confirmed as a sales commodity from among the candidate commodities is displayed.

Moreover, the CPU 106 performs the control process based on the control program, and the computer in which the CPU 106 is positioned in the central portion functions as a control unit.

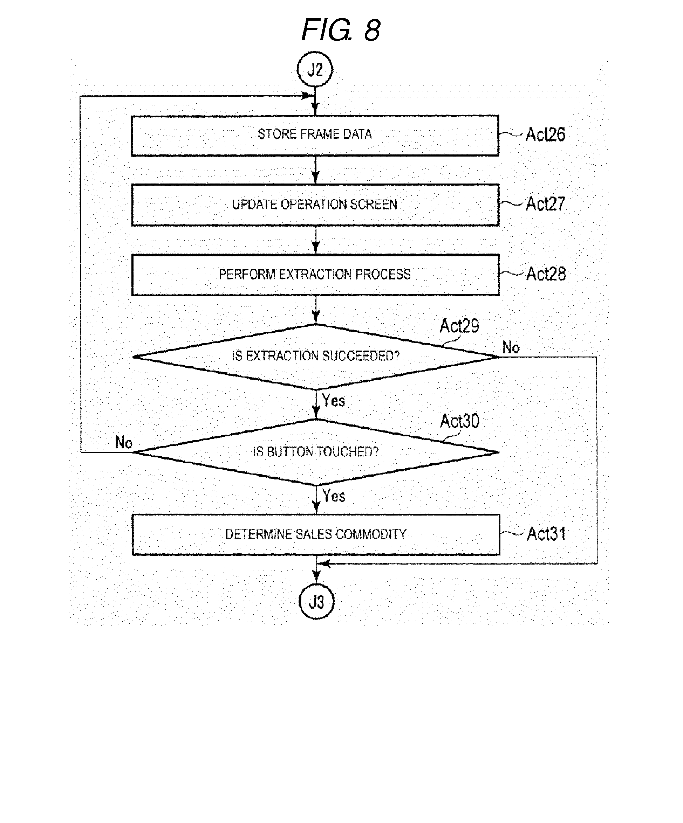

The CPU 106 proceeds to Act 26 illustrated in FIG. 8 when the CPU 106 finishes the process of Act 25.

The CPU 106 stores frame data output by the imaging device 105a in the RAM 108 in Act 26.

The CPU 106 updates the operation screen in Act 27. Specifically, the CPU 106 replaces the image displayed on the region R11 for frame data newly acquired in Act 26.

The CPU 106 performs the extraction process in Act 28 in the same manner as that in Act 15.

The CPU 106 confirms whether an object is extracted in Act 29. In addition, the CPU 106 determines as Yes when an object is extracted and proceeds to Act 30.

The CPU 106 determines whether a button is touched in order to confirm a sales commodity in Act 30. Specifically, the CPU 106 confirms whether a touch operation on any of the regions R12 to R15 is detected by the touch panel 103. Moreover, the CPU 106 determines as No when the corresponding touch operation is not detected and returns to Act 26. In addition, the CPU 106 waits until an object cannot be extracted or a button is touched for determining a sales commodity in the loop of Acts 26 to 30. Further, the CPU 106 determines as Yes in Act 30 and proceeds to Act 31 when the corresponding process of touching a button is performed.

The CPU 106 determines a sales commodity according to the touch position in Act 31. Specifically, the CPU 106 determines which of the regions R12 to R15 the touch position is in and determines the candidate associated with the corresponding area as the sales commodity. For example, the CPU 106 determines "Fuji" as the sales commodity when the region R14 in the operation screen SC3 is touched. When the CPU 106 performs the control process based on the control program, the computer in which the CPU 106 is positioned in the central position functions as an input unit. Next, the CPU 106 returns to Act 13 in FIG. 6.

Moreover, the CPU 106 notifies the POS terminal 200 of the PLU code of the commodity determined as the sales commodity through the POS terminal interface 114. When the POS terminal 200 is notified of the PLU code as described above, the reader interface 214 receives the information. Further, the reader interface 214 notifies the CPU 206 of the PLU code. In response to the notification, the CPU 206 performs data processing related to the sales of the commodity to be identified by the notified PLU code. The data processing may be the same as the process performed by, for example, another existing POS terminal. The computer in which the CPU 206 is positioned in the central portion functions as a processing unit.

Moreover, a sales commodity is not reflected on the frame image when the operator moves the sales commodity held in front of the imaging unit 105 out of the visual field of the imaging unit 105 while the CPU 106 performs processes of the loop of Acts 26 to 30. For this reason, the CPU 106 cannot extract the object in Act 28. Further, the CPU 106 in this case determines as No in Act 29 and returns to Act 13 in FIG. 6 without performing the process of Act 31. That is, the CPU 106 in this case discards the recognition results obtained in Act 17 and starts recognition of new commodities.

Moreover, the CPU 106 may perform determination of a sales commodity, which is made by touching any of the regions R12 to R15, until a new object is extracted even after an object cannot be extracted any more.

As described above, in the operation screen for the operator to select one commodity from among candidate commodities, a display color close to a color of the appearance of a candidate commodity is used for the background of a button associated with the candidate commodity. Accordingly, when the operator confirms the characters displayed in the foreground of the button with the background color which is close to the color of the appearance of the sales commodity held in front of the imaging unit 105, the characters are highly likely to be the commodity name of the sales commodity. In addition, since candidate commodities whose appearances have colors different from each other are included, the operator may not confirm the characters displayed in the foreground of the button when buttons whose background colors are different from the colors of the appearances of sales commodities are present.

Accordingly, the operator can more easily find the button to be touched for determination of a sales commodity. That is, the operator can intuitively determine the button to be touched.

Various modifications of the exemplary embodiment are possible as below.

The display color database may be stored in the storage unit included in the outside of the commodity reader 100 as in the case of the auxiliary storage unit 209 or the storage unit included in the server 700.

The process of Act 2 may be performed in Act 21 without using the display color database.

The commodity reader 100 does not include the touch panel 103 and the operation screen may be displayed on the external display device.

The commodity reader 100 does not include the imaging unit 105 and the above-described process may be performed by incorporating the frame data obtained by the external imaging device.

The number, the shape, and the arrangement of buttons for selecting a candidate commodity in the operation screen may be optional.

In a button, the place within the button in which a display color is to be used, for example, the display color is used in only a part of the background, the display color is used for the characters, or the background is set to have a color different from the display color, is optional.

The specific contents of the processes performed by the CPU 106 can be arbitrarily changed as long as the same function can be realized. For example, in the exemplary embodiment described above, the commodity reader 100 includes all functions required to determine commodities, but the functions may be distributed to the commodity reader 100 and the POS terminal 200. In addition, the POS terminal 200 may have all functions required to determine commodities. That is, some or all of the control processes illustrated in FIGS. 4 and 5 may be realized by the processes performed by the CPU 206 based on the control program stored in the ROM 207 or the auxiliary storage unit 209.

Alternatively, some or all control processes thereof may be realized as a POS terminal or a cash register having the functions of the commodity reader 100 built-in.

Without being limited to the recognition of commodities for sales data processing, the technique of the present application can be used for recognition of various commodities.

Several exemplary embodiments are described above, but the exemplary embodiments are merely examples and are not intended to limit the range of the invention. These novel exemplary embodiments can be realized in various other forms and omissions, replacements, and modifications are possible without departing from the scope of the invention. These exemplary embodiments or deformations thereof are included in the range or the scope of the invention and also included in the range equivalent to the aspects of the invention.

## Claims

1. An article recognition device configured to recognize an article by referring to dictionary data which is stored in a storage device in association with each of a plurality of articles and to describe feature amount data digitizing features of the appearance including colors of the articles, the device comprising:
a selection unit which selects a display color close to the color of the appearance of the article from among a plurality of display colors based on the feature amount data stored in the storage device;
an acquisition unit which acquires the feature amount data by digitizing the features of the appearance of the article reflected on an image captured by an imaging device;
an election unit which elects at least one candidate of the article reflected on the image from among the plurality of articles by matching the feature amount data acquired by the acquisition unit with the feature amount data described in the dictionary data;
a control unit configured to control a display device such that a display screen of the display device is used as an operation screen including at least one button which is used for an operator to select one candidate from among candidates elected by the election unit and whose at least a part is displayed with a display color selected by the selection unit related to the article serving as the candidate; and
an input unit configured to input an operation of the operator for selecting one candidate from among candidates elected by the election unit according to the operation on the operation screen displayed by the display device.

2. The device according to claim 1, further comprising:
a storage unit configured to store color data displaying display colors selected by the selection unit related to the article in association with each of the plurality of articles,
wherein the control unit is configured to display the button for selecting the candidate article by the operator on the operation screen with the display color displayed by the color data stored in the storage unit in association with the article serving as a candidate.

3. The device according to claim 1 or 2, wherein the control unit displays the button such that characters for identifying the candidate article are displayed as the foreground and the background is displayed by the display color selected by the selection unit.

4. The device according to any one of claims 1 to 3, wherein the control unit displays the button such that an image showing the appearance of the candidate article is displayed as the foreground and the background is displayed by the display color selected by the selection unit.

5. A sales data processing device configured to perform data processing related to sales of the recognized article, the sales data processing device comprising:
an article recognition device according to any one of claims 1 to 4; and
a processing unit configured to perform the data processing based on the operation input by the input unit.

6. A method of controlling an article recognition device that recognizes an article by referring to dictionary data which is stored in a storage device in association with each of a plurality of articles and describes feature amount data digitizing features of the appearance including colors of the articles, the method comprising:
selecting a display color close to the color of the appearance of the article from among a plurality of display colors based on the feature amount data stored in the storage device;
acquiring the feature amount data by digitizing the features of the appearance of the article reflected on an image captured by an imaging device;
electing at least one candidate of the article reflected on the image from among the plurality of articles by matching the feature amount data acquired in the acquiring with the feature amount data described in the dictionary data;
controlling a display device such that a display screen of the display device is used as an operation screen including at least one button which is used for an operator to select one candidate from among candidates elected in the electing and whose at least a part is displayed with a display color selected in the selecting related to the article serving as a candidate; and
inputting an operation of the operator for selecting one candidate from among candidates elected in the electing according to the operation on the operation screen displayed by the display device.

7. The method according to claim 6, further comprising:
storing color data displaying display colors selected at the selecting step related to the article in association with each of the plurality of articles; and
displaying the button for selecting the candidate article by the operator on the operation screen with the display color displayed by the color data stored at the storing step in association with the article serving as a candidate.

8. The method according to claim 6 or 7, further comprising :
displaying the button such that characters for identifying the candidate article are displayed as the foreground and the background is displayed by the display color selected at the selecting step.

9. The device according to any one of claims 6 to 8, further comprising :
displaying the button such that an image showing the appearance of the candidate article is displayed as the foreground and the background is displayed by the display color selected at the selecting unit.
